(19)

Europäisches
Patentamt

European
Patent Office

Office européen
des brevets

(11)  **EP 4 636 843 A2**

(12)  **EUROPEAN PATENT APPLICATION**

(43) Date of publication:
**22.10.2025  Bulletin 2025/43**

(21) Application number: **25169933.6**

(22) Date of filing: **11.04.2025**

(51) International Patent Classification (IPC):
*H01M 4/133* (2010.01)    *H01M 4/1393* (2010.01)
*H01M 4/36* (2006.01)    *H01M 4/38* (2006.01)
*H01M 4/587* (2010.01)    *H01M 10/0525* (2010.01)
*H01M 4/134* (2010.01)    *H01M 4/02* (2006.01)

(52) Cooperative Patent Classification (CPC):
**H01M 4/587; H01M 4/133; H01M 4/1393;
H01M 4/366; H01M 4/386; H01M 10/0525;**
H01M 4/134; H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **16.04.2024  KR 20240050838**

(71) Applicant: **SAMSUNG SDI CO., LTD.
Yongin-si, Gyeonggi-do 17084 (KR)**

(72) Inventors:
• **LEE, Taeil
  17084 Gyeonggi-do (KR)**

• **PARK, Jin Seok
  17084 Gyeonggi-do (KR)**
• **NAM, Hyun
  17084 Gyeonggi-do (KR)**
• **LEE, Minho
  17084 Gyeonggi-do (KR)**
• **PARK, JeongJoo
  17084 Gyeonggi-do (KR)**

(74) Representative: **Michalski Hüttermann & Partner
Patentanwälte mbB
Kaistraße 16A
40221 Düsseldorf (DE)**

(54)  **NEGATIVE ELECTRODE FOR RECHARGEABLE LITHIUM BATTERY AND RECHARGEABLE LITHIUM BATTERY INCLUDING THE SAME**

(57)  Disclosed are negative electrodes and rechargeable lithium batteries including the same. The negative electrode includes a negative electrode current collector, and a negative electrode active material layer on the negative electrode current collector. The negative electrode active material layer includes a first active material layer, a second active material layer, and a third active material layer that are sequentially stacked on the negative electrode current collector. The first, second, and third active material layers include first, second, and third crystalline carbons, respectively. The first active material layer is a random orientation layer whose degree of divergence (DD) value is $\geq 5$ to $\leq 20$. The third active material layer may be an orientation layer whose DD value is $\geq 20$ to $\leq 60$.

FIG. 1

EP 4 636 843 A2

## Description

### CROSS-REFERENCE TO RELATED APPLICATION

The present application claims priority to and the benefit of Korean Patent Application No. 10-2024-0050838, filed on April 16, 2024, in the Korean Intellectual Property Office, the entire content of which is hereby incorporated by reference.

### BACKGROUND

#### 1. Field

Embodiments of the present disclosure relate to a negative electrode for a rechargeable lithium battery and a rechargeable lithium battery including the same, and, for example, to a multilayered negative electrode for a rechargeable lithium battery and a rechargeable lithium battery including the same.

#### 2. Description of the Related Art

Recently, with the rapid spread of battery using electronic devices, such as mobile phones, laptop computers, and electric vehicles, there is a rapidly increasing interest in rechargeable batteries having high energy density and high capacity. Therefore, intensive research has been conducted to improve performance of rechargeable lithium batteries.
A rechargeable lithium battery includes a positive electrode, a negative electrode, and an electrolyte, which positive and negative electrodes include an active material in which intercalation and deintercalation are possible, and generates electrical energy caused by oxidation and reduction reactions when lithium ions are intercalated and deintercalated.

### SUMMARY

An embodiment of the present disclosure provides a negative electrode for a rechargeable lithium battery having a large capacity, a high charge/discharge rate, and stability.
An embodiment of the present disclosure provides a rechargeable lithium battery having a large capacity, a high charge/discharge rate, and stability.
According to an embodiment of the present disclosure, a negative electrode for a rechargeable lithium battery may include: a negative electrode current collector; and a negative electrode active material layer on the negative electrode current collector. The negative electrode active material layer may include a first active material layer, a second active material layer, and a third active material layer that are sequentially stacked on the negative electrode current collector. The first, second, and third active material layers may include first, second, and third crystalline carbons, respectively. The first active material layer may be a random orientation layer whose degree of divergence (DD) value defined by Equation 1 is $\geq 5$ to $\leq 20$. The third active material layer may be an orientation layer whose DD value defined by Equation 1 is $\geq 20$ to $\leq 60$.

### Equation 1

$$DD \text{ (degree of divergence)} = (I_a/I_{total}) \times 100$$

In Equation 1, $I_a$ may be a sum of peak intensities at non-planar angles in an X-ray diffraction (XRD) measurement using a CuK$\alpha$ ray, and $I_{total}$ may be a sum of peak intensities at all angles in the XRD measurement using the CuK$\alpha$ ray.
According to an embodiment of the present disclosure, a negative electrode for a rechargeable lithium battery may include: a negative electrode current collector; and a negative electrode active material layer on the negative electrode current collector. The negative electrode active material layer may include a first active material layer, a second active material layer, and a third active material layer that are sequentially stacked on the negative electrode current collector. The first, second, and third active material layers may include a first crystalline carbon (LGR), a second crystalline carbon, and a third crystalline carbon, respectively. A ratio of a DD value of the third active material layer to a DD value of the first active material layer may be in a range of $\geq 2.2$ to $\leq 7$.
According to an embodiment of the present disclosure, a rechargeable lithium battery may include: the negative electrode discussed above; a positive electrode; and an electrolyte between the negative electrode and the positive electrode.

## BRIEF DESCRIPTION OF DRAWINGS

The accompanying drawings, together with the specification, illustrate embodiments of the subject matter of the present disclosure, and, together with the description, serve to explain principles of embodiments of the subject matter of the present disclosure.

FIG. 1 is a simplified conceptual diagram showing a rechargeable lithium battery according to an embodiment of the present disclosure.

FIGS. 2-5 are diagrams showing rechargeable lithium batteries according to embodiments of the present disclosure.

FIG. 6 is a cross-sectional view showing a rechargeable lithium battery according to an embodiment of the present disclosure.

FIG. 7 is an enlarged cross-sectional view showing section M of FIG. 6.

FIGS. 8A-8C are simplified conceptual diagrams respectively showing first to third crystalline carbons.

FIG. 9 is an enlarged cross-sectional view of section M in FIG. 6, showing a rechargeable lithium battery according to another embodiment of the present disclosure.

FIGS. 10-11 are cross-sectional views showing a method of manufacturing a negative electrode according to an embodiment of the present disclosure.

FIG. 12 is a cross-sectional view showing a method of manufacturing a negative electrode according to another embodiment of the present disclosure.

FIG. 13 is a cross-sectional view showing a method of manufacturing a negative electrode according to a comparative example of the present disclosure.

## DETAILED DESCRIPTION

In order to sufficiently understand the configuration and effect of the subject matter of the present disclosure, some embodiments of the present disclosure will be described with reference to the accompanying drawings. It should be noted, however, that the present disclosure is not limited to the following example embodiments, and may be implemented in various suitable forms. Rather, the example embodiments are provided only to disclose the subject matter of the present disclosure and let those skilled in the art fully know the scope of the present disclosure.

In this description, it will be understood that, if an element is referred to as being on another element, the element can be directly on the other element or intervening elements may be present between therebetween. In the drawings, thicknesses of some components may be exaggerated for effectively explaining the technical contents. Like reference numerals refer to like elements throughout the specification.

Unless otherwise specially noted in this description, the expression of singular form may include the expression of plural form. In embodiments, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, and/or a reaction product.

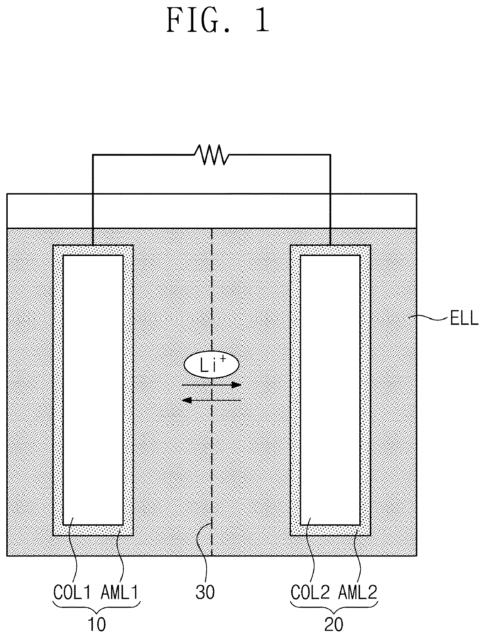

FIG. 1 is a simplified conceptual diagram showing a rechargeable lithium battery according to an embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated with the electrolyte ELL.

The electrolyte ELL may be a medium by which lithium ions are transferred between the positive electrode 10 and the negative electrode 20. In the electrolyte ELL, the lithium ions may move through the separator 30 toward one selected from the positive electrode 10 and the negative electrode 20.

## Positive Electrode 10

The positive electrode 10 for a rechargeable lithium battery may include a current collector COL1 and a positive electrode active material layer AML1 on the current collector COL1. The positive electrode active material layer AML1 may include a positive electrode active material and further include a binder and/or a conductive material (e.g., an electrically conductive material).

For example, the positive electrode 10 may further include an additive that can serve as a sacrificial positive electrode.

An amount of the positive electrode active material in the positive electrode active material layer AML1 may be $\geq$ 90 wt% to $\leq$ 99.5 wt% relative to 100 wt% of the positive electrode active material layer AML1. An amount of each of the binder and the conductive material may be $\geq$ 0.5 wt% to $\leq$ 5 wt% relative to 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and/or nylon, but the present disclosure is not limited thereto.

The conductive material may be used to provide an electrode with conductivity (e.g., electrical conductivity), and any suitable conductive material without causing chemical change of a battery (e.g., does not cause an undesirable chemical change in the rechargeable lithium battery) may be used as the conductive material to constitute the battery. The conductive material may include, for example, a carbon-based material such as natural graphite, artificial graphite, carbon black, acetylene black, Ketjenblack, carbon fiber, carbon nano-fiber, and/or carbon nano-tube; a metal powder and/or metal fiber including one or more of copper, nickel, aluminum, and/or silver; a conductive polymer (e.g., an electrically conductive polymer) such as a polyphenylene derivative; or a mixture thereof.

Aluminum (Al) may be used as the current collector COL1, but the present disclosure is not limited thereto.

## Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is selected from cobalt, manganese, nickel, and a combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound represented by one selected from the chemical formulae below. $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}O_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); and $Li_aFePO_4$ (where $0.90 \leq a \leq 1.8$).

In the chemical formulae above, A is Ni, Co, Mn, or a combination thereof, X is Al, Ni, Co, Mn, Cr, Fe, Mg, Sr, V, a rare-earth element, or a combination thereof, D is O, F, S, P, or a combination thereof, G is Al, Cr, Mn, Fe, Mg, La, Ce, Sr, V, or a combination thereof, and $L^1$ is Mn, Al, or a combination thereof.

For example, the positive electrode active material may be a high nickel-based positive electrode active material having a nickel amount of equal to or greater than $\geq$ 80 mol%, equal to or greater than $\geq$ 85 mol%, equal to or greater than $\geq$ 90 mol%, equal to or greater than $\geq$ 91 mol%, or equal to or greater than $\geq$ 94 mol% and equal to or less than $\geq$ 99 mol% relative to 100 mol% of metal devoid of lithium in the lithium transition metal composite oxide. The high-nickel-based positive electrode active material may achieve high capacity and thus may be applied to a high-capacity and high-energy-density rechargeable lithium battery.

## Negative Electrode 20

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive material (e.g., an electrically conductive material).

For example, the negative electrode active material layer AML2 may include a negative electrode active material of $\geq$ 90 wt% to $\leq$ 99 wt%, a binder of $\geq$ 0.5 wt% to $\leq$ 5 wt%, and a conductive material (e.g., an electrically conductive material) of $\geq$ 0 wt% to $\leq$ 5 wt%.

The binder may serve to improve attachment of negative electrode active material particles to each other and also to improve attachment of the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include styrene-butadiene rubber, (meth)acrylated styrene-butadiene rubber, (meth) acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

If an aqueous binder is used as the negative electrode binder, a cellulose-based compound capable of providing or increasing viscosity may further be included. The cellulose-based compound may include one or more selected from carboxymethyl cellulose, hydroxypropylmethyl cellulose, methyl cellulose, and alkali metal salts thereof. The alkali metal may include Na, K, and/or Li.

The dry binder may include a fibrillizable polymer material, for example, polytetrafluoroethylene, polyvinylidene fluoride, polyvinylidene fluoride-hexafluoropropylene copolymer, polyethylene oxide, or a combination thereof.

The conductive material may be used to provide an electrode with conductivity (e.g., electrical conductivity), and any suitable conductive material without causing chemical change of a battery (e.g., that does not cause an undesirable chemical change in the rechargeable lithium battery) may be used as the conductive material to constitute the battery. For example, the conductive material may include a carbon-based material such as natural graphite, artificial graphite, carbon black, acetylene black, Ketjenblack, carbon fiber, carbon nano-fiber, and/or carbon nano-tube; a metal powder and/or metal fiber including one or more of copper, nickel, aluminum, and/or silver; a conductive polymer (e.g., an electrically conductive polymer) such as a polyphenylene derivative; or a mixture thereof.

The current collector COL2 may include a copper foil, a nickel foil, a stainless-steel foil, a titanium foil, a nickel foam, a copper foam, a polymer substrate coated with a conductive metal, or a combination thereof.

**Negative Electrode Active Material**

The negative electrode active material in the negative electrode active material layer AML2 may include a material that can reversibly intercalate and deintercalate lithium ions, lithium metal, a lithium metal alloy, a material that can dope and de-dope lithium, and/or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, and/or fiber-shaped natural and/or artificial graphite, and the amorphous carbon may include soft carbon, hard carbon, mesophase pitch carbon, and/or calcined coke.

The lithium metal alloy may include an alloy of lithium and metal that is selected from Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material and/or a Sn-based negative electrode active material. The Si-based negative electrode active material may include silicon, silicon-carbon composite, $SiO_x$ (where 0<x<2), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) on a surface of the secondary particle. The amorphous carbon may also be between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer on a surface of the core.

The Si-based negative electrode active material and/or the Sn-based negative electrode active material may be used in combination with a carbon-based negative electrode active material.

**Separator 30**

Based on a type (or kind) of the rechargeable lithium battery, the separator 30 may be present between positive electrode 10 and the negative electrode 20. The separator 30 may include one or more selected from polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer on one or opposite surfaces of the porous substrate, which coating layer includes an organic material, an inorganic material, or a combination thereof.

The porous substrate may be a polymer layer including one selected from polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer and/or a (meth)acrylic copolymer.

The inorganic material may include an inorganic particle selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be present mixed together in one coating layer or may be present as a stack of a coating layer including the organic material and a coating layer including an inorganic material.

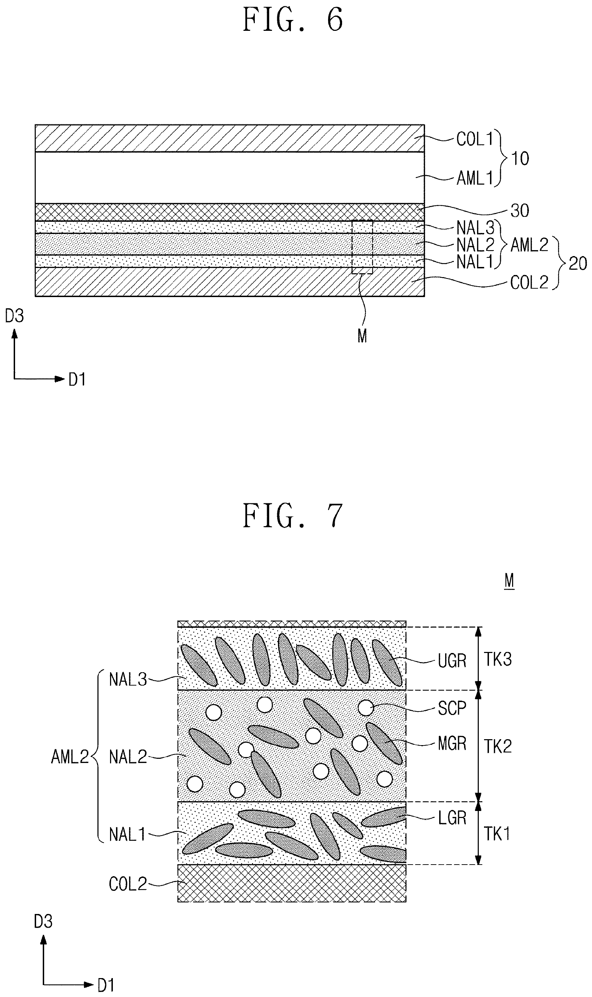

The negative electrode active material layer AML2 according to an embodiment of the present disclosure will be further discussed in more detail with reference to FIGS. 6-8.

**Electrolyte ELL**

The electrolyte ELL for a rechargeable lithium battery may include a non-aqueous organic solvent and a lithium salt. The non-aqueous organic solvent may serve as a medium that transmits ions that participate in an electrochemical reaction of a battery. The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol. The aprotic solvent may include nitriles such as R-CN (where R is a hydrocarbon group having a C2 to C20 linear, branched, or cyclic structure and may include a double bond, an aromatic ring, and/or an ether group); amides such as dimethylformamide; dioxolanes such as 1,3-dioxolane, and/or 1,4-dioxolane; and/or sulfolanes.

The non-aqueous organic solvent may be used alone or in a mixture of two or more substances.

In embodiments, if a carbonate-based solvent is used, a cyclic carbonate and a chain carbonate may be mixed together and used, and the cyclic carbonate and the chain carbonate may be mixed together in a volume ratio of $\geq$ 1:1 to $\leq$ 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

**Rechargeable Lithium Battery**

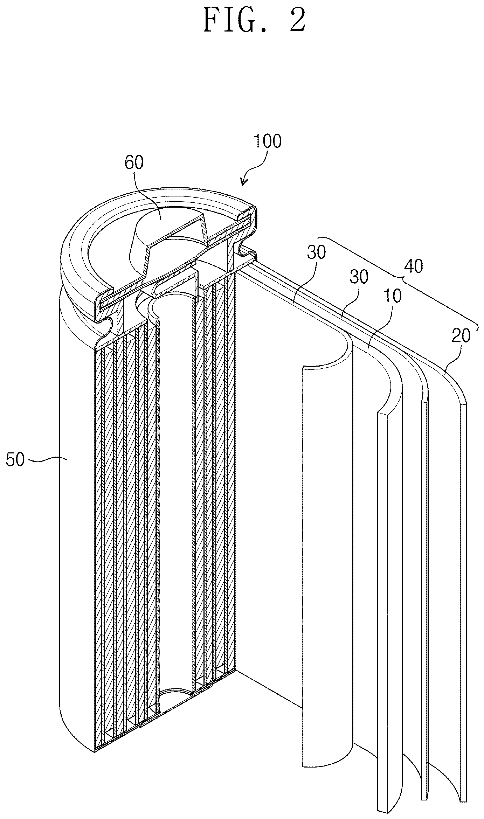

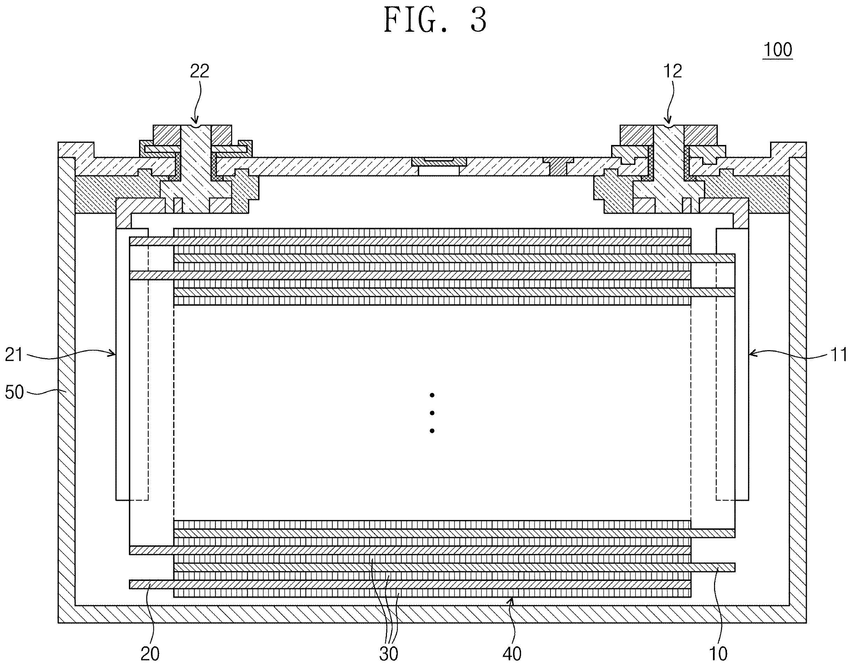

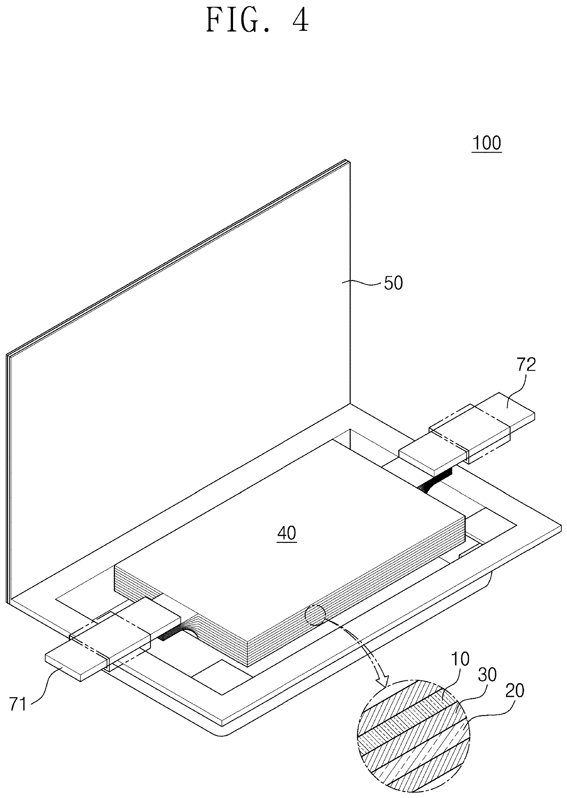

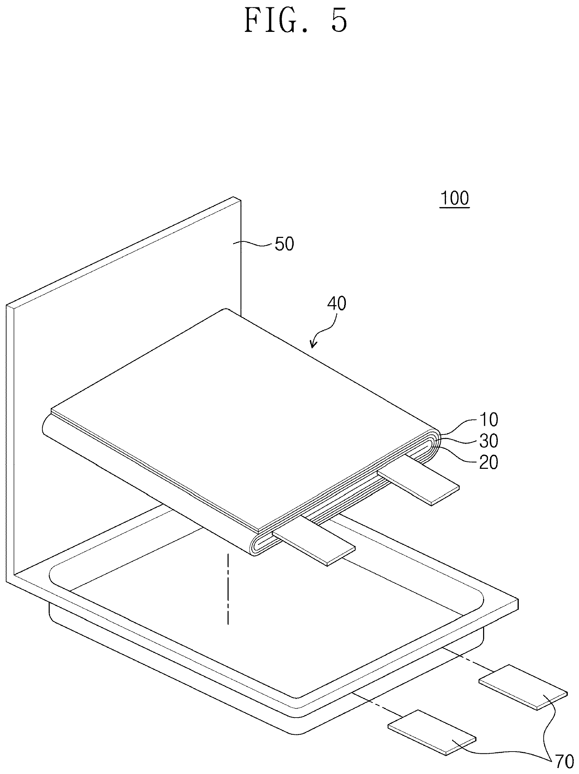

Based on a shape of a rechargeable lithium battery, the rechargeable lithium battery may be classified into cylindrical, prismatic, pouch, and/or coin types (or kinds). FIGS. 2-5 are simplified diagrams showing rechargeable lithium batteries according to embodiments, FIG. 2 shows a cylindrical battery, FIG. 3 shows a prismatic battery, and FIGS. 4-5 show pouch-type batteries. Referring to FIGS. 2-4, a rechargeable lithium battery 100 may include an electrode assembly 40 in which a separator 30 is between a positive electrode 10 and a negative electrode 20, and may also include a casing 50 in which the electrode assembly 40 is accommodated. The positive electrode 10, the negative electrode 20, and the separator 30 may be impregnated with an electrolyte. The rechargeable lithium battery 100 may include a sealing member 60 that seals the casing 50 as illustrated in FIG. 2. In embodiments, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4-5, the rechargeable lithium battery 100 may include an electrode tab 70 (FIG. 5), or a positive electrode tab 71 and a negative electrode tab 72 (FIG. 4), which electrode tab 70 serves as an electrical path for externally inducing a current generated in the electrode assembly 40.

The following description will focus on a rechargeable lithium battery according to some embodiments of the present disclosure.

FIG. 6 is a cross-sectional view showing a rechargeable lithium battery according to an embodiment of the present disclosure. FIG. 7 is an enlarged cross-sectional view showing section M of FIG. 6.

Referring to FIGS. 6-7, as discussed above with reference to FIG. 1, a rechargeable lithium battery according to the present disclosure may include a positive electrode 10, a negative electrode 20, and a separator 30 between the positive electrode 10 and the negative electrode 20. In embodiments, the rechargeable lithium battery according to the present disclosure may further include an electrolyte ELL. The separator 30 may be impregnated with the electrolyte ELL.

The positive electrode 10 may include a positive electrode current collector COL1 and a positive electrode active material layer AML1 on the positive electrode current collector COL1. The negative electrode 20 may include a negative electrode current collector COL2 and a negative electrode active material layer AML2 on the negative electrode current collector COL2. The separator 30 may be between the positive electrode active material layer AML1 and the negative electrode active material layer AML2.

The negative electrode active material layer AML2 according to an embodiment of the present disclosure may have a multilayered structure. For example, the negative electrode active material layer AML2 may include a first active material layer NAL1, a second active material layer NAL2, and a third active material layer NAL3 that are sequentially stacked. The first active material layer NAL1 may be directly on the negative electrode current collector COL2. The second active material layer NAL2 may be between the first active material layer NAL1 and the third active material layer NAL3.

The first to third active material layers NAL1 to NAL3 may include respective negative electrode active materials that are different from each other. The first to third active material layers NAL1 to NAL3 may have respective compositions that are different from each other. Each of the first to third active material layers NAL1 to NAL3 may include a carbon-based negative electrode active material, such as crystalline carbon, amorphous carbon, or any combination thereof. A detailed description thereof may be the same as that of the negative electrode active material.

The first active material layer NAL1 may include a first crystalline carbon LGR. The second active material layer NAL2 may include a second crystalline carbon MGR and a silicon-containing particle SCP. The third active material layer NAL3 may include a third crystalline carbon UGR. Each of the first, second, and third crystalline carbons LGR, MGR, and UGR may be natural graphite, artificial graphite, or any suitable mixture thereof.

In an embodiment, in the first crystalline carbon LGR of the first active material layer NAL1, natural graphite may have a proportion of $\geq 0$ wt% to $\leq 100$ wt%, $\geq 50$ wt% to $\leq 100$ wt%, or $\geq 80$ wt% to $\leq 100$ wt%. In the first crystalline carbon LGR, a remainder other than natural graphite may be artificial graphite. In the first crystalline carbon LGR of the first active material layer NAL1, the proportion of natural graphite may be greater than that of artificial graphite.

In an embodiment of the present disclosure, in the third crystalline carbon UGR of the third active material layer NAL3, artificial graphite may have a proportion of $\geq 0$ wt% to $\leq 100$ wt%, $\geq 50$ wt% to $\leq 100$ wt%, or $\geq 80$ wt% to $\leq 100$ wt%. In the third crystalline carbon UGR, a remainder other than artificial graphite may be natural graphite. In the third crystalline carbon UGR of the third active material layer NAL3, the proportion of artificial graphite may be greater than that of natural graphite. For example, in embodiments, the first active material layer NAL1 may include natural graphite, the third active material layer NAL3 may include artificial graphite, and the second active material layer NAL2 may include a mixture of natural graphite and artificial graphite.

In an embodiment of the present disclosure, the second crystalline carbon MGR of the second active material layer NAL2 may include a mixture of natural graphite and artificial graphite. A ratio of natural graphite and artificial graphite of the second crystalline carbon MGR may range from $\geq 1:9$ to $\leq 9:1$.

In another embodiment of the present disclosure, the second active material layer NAL2 may not include the second crystalline carbon MGR. The second active material layer NAL2 may include an amorphous carbon and a silicon particle. The second active material layer NAL2 may include a silicon-carbon composite as the silicon-containing particle SCP which will be further discussed below.

The second active material layer NAL2 may contain carbon (C) and silicon (Si). The silicon (Si) may originate from the silicon-containing particle SCP. The carbon (C) may originate from at least one selected from the second crystalline carbon MGR in the second active material layer NAL2, amorphous carbon, and carbon in the silicon-containing particle SCP.

The silicon (Si) in the second active material layer NAL2 may have a proportion of $\geq 5$ wt% to $\leq 99$ wt%, $\geq 5$ wt% to $\leq 30$ wt%, or $\geq 5$ wt% to $\leq 10$ wt%. The silicon-containing particle SCP may include silicon, silicon-carbon composite, $SiO_x$ (where $0<x<2$), Si-Q alloy (where Q is alkali metal, alkaline earth metal, Group 13 element, Group 14 element (except for Si), Group 15 element, Group 16 element, transition metal, a rare-earth element, or any combination thereof), or any combination thereof.

Each of the first to third active material layers NAL1 to NAL3 may further include a binder. The binder in each of the first to third active material layers NAL1 to NAL3 may have an amount of $\geq 1$ wt% to $\leq 10$ wt%. In an embodiment of the present disclosure, the binder of the second active material layer NAL2 including the silicon-containing particle SCP may have an amount greater than that of the binder of each of the first active material layer NAL1 including crystalline carbon and the silicon-containing particle SCP and the third active material layer NAL3 including only crystalline carbon (e.g., only including carbon and the binder, or not including silicon such as, for example a silicon-containing particle). A large amount of a binder in an active material layer may cause a problem of a reduction in movement speed of lithium ions.

The first active material layer NAL1 may have a first thickness TK1, the second active material layer NAL2 may have a second thickness TK2, and the third active material layer NAL3 may have a third thickness TK3. In an embodiment of the present disclosure, the second thickness TK2 may be greater than the first thickness TK1. The second thickness TK2 may be greater than the third thickness TK3.

As the second active material layer NAL2 includes the silicon-containing particle SCP, the second active material layer NAL2 may have an increased volume during charging of the rechargeable lithium battery. For example, the second thickness TK2 of the second active material layer NAL2 may increase if the rechargeable lithium battery is charged. However, the first active material layer NAL1 and the third active material layer NAL3 including only crystalline carbon (e.g., only including carbon and the binder, or not including silicon such as, for example a silicon-containing particle) may have no large variation in volume (or thickness). While the present disclosure is not limited by any particular mechanism or theory, it is believed that the foregoing may be caused by the fact that, if the battery is charged, the silicon-containing particle SCP intercalates lithium ions more than crystalline carbon. During charge and discharge of the rechargeable lithium battery, the first active material layer NAL1 and the third active material layer NAL3 may serve as a buffer layer to reduce a variation in volume (or thickness) of the second active material layer NAL2.

Referring back to FIG. 7, each of the first to third active material layers NAL1 to NAL3 may have a value of degree of divergence (DD) defined by Equation 1 below.

## Equation 1

$$\text{DD (degree of divergence)} = (I_a/I_{total}) \times 100$$

In Equation 1, $I_a$ may indicate a sum of peak intensities at non-planar angles in the X-ray diffraction (XRD) measurement using the CuK$\alpha$ ray. In embodiments, $I_{total}$ may indicate a sum of peak intensities at all angles in the XRD measurement using the CuK$\alpha$ ray.

The non-planar angles may be $2\theta=42.4\pm0.2°$, $43.4\pm0.2°$, $44.6\pm0.2°$, and $77.5\pm0.2°$ in the XRD measurement using the CuK$\alpha$ ray. For example, these angles $42.4\pm0.2°$, $43.4\pm0.2°$, $44.6\pm0.2°$, and $77.5\pm0.2°$ may represent a (100) plane, a (101)R plane, a (101)H plane, and a (110) plane, respectively. In general, based on a stacking order of graphene layers, graphite may be classified into a hexagonal structure having an ABAB-type stacking sequence and a rhombohedral structure. The R plane may indicate a rhombohedral structure, and the H plane may denote a hexagonal structure.

All the angles may be $2\theta=26.5\pm0.2°$, $42.4\pm0.2°$, $43.4\pm0.2°$, $44.6\pm0.2°$, $54.7\pm0.2°$, and $77.5\pm0.2°$ in the XRD measurement using the CuK$\alpha$ ray. For example, these angles $26.5\pm0.2°$, $42.4\pm0.2°$, $43.4\pm0.2°$, $44.6\pm0.2°$, $54.7\pm0.2°$, and $77.5\pm0.2°$ may represent a (002) plane, a (100) plane, a (101)R plane, a (101)H plane, a (004) plane, and (110) plane, respectively. A peak that appears at $2\theta=43.4\pm0.2°$ may be seen as an overlap of peaks that correspond to a (100)R plane of a carbon-based material and a (111) plane of a current collector or Cu.

A peak intensity value may mean a height value of peak or an integral value of peak. In an embodiment, a peak intensity value may be an integral value of peak.

In an embodiment of the present disclosure, the XRD measurement may be performed using a CuK$\alpha$ ray as a target ray. The target ray may be extracted by using a monochromator for improvement of peak intensity resolution. The measurement may be performed under the condition of $2\theta=10°$ to $80°$, a scan speed (°/s) of 0.044 to 0.089, and a step size of 0.026°/step.

The DD value according to an embodiment of the present disclosure may be obtained by measuring XRD with respect to the negative electrode active material layer AML2 acquired by fully charging and discharging the rechargeable lithium battery shown in FIG. 6 and then dissembling the battery in the fully discharged state. The charge and discharge may be performed once or twice at 0.1 C to 0.2 C.

If the negative electrode active material layer AML2 undergoes the XRD measurement using the CuK$\alpha$ ray, a peak intensity ratio ($I_{(004)}/I_{(002)}$) of a (004) plane to a (002) plane may be equal to or greater than $\geq 0.04$ or from $\geq 0.04$ to $\leq 0.07$. If the ratio $I_{(004)}/I_{(002)}$ of the negative electrode active material layer AML2 is equal to or greater than $\geq 0.04$, rate characteristics (e.g., high rate characteristics) and cycle lifetime characteristics may improve without increasing a direct-current internal resistance.

The DD value may be physical properties maintained even during or after charge and discharge. The DD values of the active material layers NAL1 to NAL3 according to an embodiment of the present disclosure may represent the degree of orientation at a constant angle of crystalline carbons in the active material layers NAL1 to NAL3. For convenience of description, FIG. 7 depicts oval-shape graphite particles as crystalline carbons, but the present disclosure is not limited thereto.

According to an embodiment of the present disclosure, the DD value of the first active material layer NAL1 may range from $\geq 5$ to $\leq 25$. The DD value of the second active material layer NAL2 may range from $\geq 15$ to $\leq 50$. The DD value of the third active material layer NAL3 may range from $\geq 20$ to $\leq 60$. The DD value of the second active material layer NAL2 may be greater than the DD value of the first active material layer NAL1. The DD value of the third active material layer NAL3 may be greater than the DD value of the second active material layer NAL2.

A difference between the DD value of the third active material layer NAL3 and the DD value of the first active material layer NAL1 may be equal to or greater than 10. The difference between the DD value of the third active material layer NAL3 and the DD value of the first active material layer NAL1 may range from $\geq 10$ to $\leq 50$.

According to an embodiment of the present disclosure, a ratio of the DD value of the third active material layer NAL3 to the DD value of the first active material layer NAL1 may range from $\geq 1.2$ to $\leq 10$, from $\geq 1.5$ to $\leq 8$, or from $\geq 2.2$ to $\leq 7$. Within the ratio ranges above, the negative electrode active material layer AML2 may have both excellent lithium ion conductivity and superior adhesion with the negative electrode current collector COL2.

The third active material layer NAL3 may have a relatively large DD value. For example, the third crystalline carbons UGR in the third active material layer NAL3 may be oriented at a set or specific angle. The third crystalline carbons UGR in the third active material layer NAL3 may erect at a set or specific angle relative to a top surface of the negative electrode current collector COL2. As the third crystalline carbons UGR are oriented in an upright position, lithium ions may easily move in the third active material layer NAL3.

The first active material layer NAL1 may have a relatively small DD value. For example, the first crystalline carbons LGR in the first active material layer NAL1 may be randomly oriented. The first crystalline carbons LGR in the first active material layer NAL1 may lie horizontally relative to the top surface of the negative electrode current collector COL2. As the first crystalline carbons LGR are randomly oriented in a lying down position.

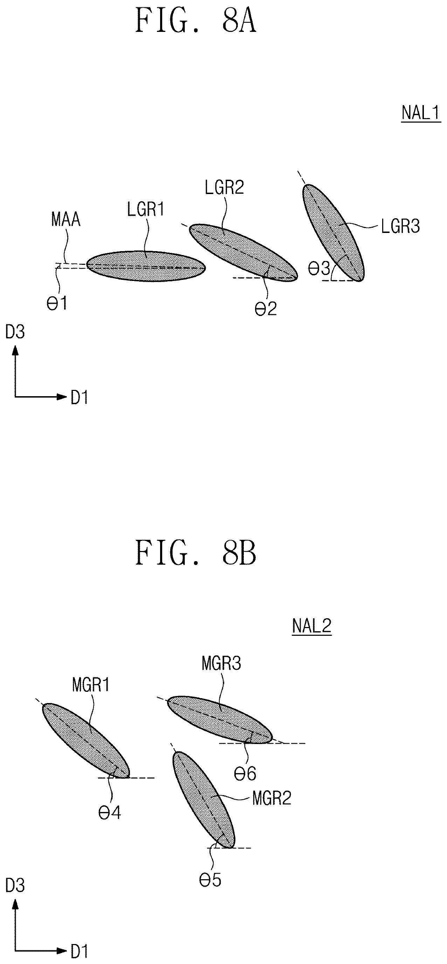

FIGS. 8A-8C are simplified conceptual diagrams respectively showing first to third crystalline carbons. Referring to FIG. 7 and FIG. 8A, there may be representatively shown some of the first crystalline carbons LGR in the first active material layer NAL1. In an embodiment, the first crystalline carbons LGR may include a first lower particle LGR1, a second lower particle LGR2, and a third lower particle LGR3. Each of the first to third lower particles LGR1 to LGR3 may have a major axis MAA in a longitudinal direction thereof. A first angle $\theta 1$ may be made between the major axis MAA of the first lower particle LGR1 and the top surface of the negative electrode current collector COL2. A second angle $\theta 2$ may be made between the major axis MAA of the second lower particle LGR2 and the top surface of the negative electrode current collector COL2. A third angle $\theta 3$ may be made between the major axis MAA of the third lower particle LGR3 and the top surface of the negative electrode current collector COL2. The first to third angles $\theta 1$ to $\theta 3$ may be the same as or different from each other.

An average value of the first to third angles $\theta 1$ to $\theta 3$ may be defined as an average angle of the first crystalline carbon LGR. For example, the average angle of the first crystalline carbon LGR may range from $\geq 0°$ to $\leq 40°$. As the first crystalline carbon LGR has an average angle of $\geq 0°$ to $\leq 40°$, the first crystalline carbon LGR may be regarded as being randomly oriented.

Referring to FIG. 7 and FIG. 8B, there may be representatively shown some of the second crystalline carbons MGR in the second active material layer NAL2. In an embodiment, the second crystalline carbons MGR may include a first middle particle MGR1, a second middle particle MGR2, and a third middle particle MGR3. Each of the first to third middle particles MGR1 to MGR3 may have a major axis MAA in a longitudinal direction thereof. A fourth angle $\theta 4$ may be made between the major axis MAA of the first middle particle MGR1 and the top surface of the negative electrode current collector COL2. A fifth angle $\theta 5$ may be made between the major axis MAA of the second middle particle MGR2 and the top surface of the negative electrode current collector COL2. A sixth angle $\theta 6$ may be made between the major axis MAA of the third middle particle MGR3 and the top surface of the negative electrode current collector COL2. The fourth to sixth angles $\theta 4$ to $\theta 6$ may be the same as or different from each other.

An average value of the fourth to sixth angles $\theta 4$ to $\theta 6$ may be defined as an average angle of the second crystalline carbon MGR. For example, the average angle of the second crystalline carbon MGR may range from $\geq 20°$ to $\leq 60°$. In an embodiment, the average angle of the second crystalline carbon MGR may be greater than the average angle of the first crystalline carbon LGR.

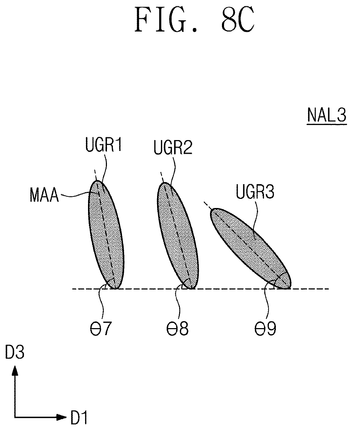

Referring to FIG. 7 and FIG. 8C, there may be representatively shown some of the third crystalline carbons UGR in the third active material layer NAL3. In an embodiment, the third crystalline carbons UGR may include a first upper particle UGR1, a second upper particle UGR2, and a third upper particle UGR3. Each of the first to third upper particles UGR1 to UGR3 may have a major axis MAA in a longitudinal direction thereof. A seventh angle $\theta 7$ may be made between the major axis MAA of the first upper particle UGR1 and the top surface of the negative electrode current collector COL2. An eighth angle θ8 may be made between the major axis MAA of the second upper particle UGR2 and the top surface of the negative electrode current collector COL2. A ninth angle θ9 may be made between the major axis MAA of the third upper particle UGR3 and the top surface of the negative electrode current collector COL2. The seventh to ninth angles θ7 to θ9 may be the same as or different from each other.

An average value of the seventh to ninth angles θ7 to θ9 may be defined as an average angle of the third crystalline carbon UGR. For example, the average angle of the third crystalline carbon UGR may range from ≥ 50° to ≤ 89°. In an embodiment, the average angle of the third crystalline carbon UGR may be greater than the average angle of the second crystalline carbon MGR. As the third crystalline carbon UGR has an average angle of ≥ 50 to ≤ 89, the third crystalline carbon UGR may be regarded as being oriented almost vertically.

Referring again to FIG. 7, the third crystalline carbons UGR of the third active material layer NAL3 may have a relatively large DD value and a relatively small average angle. For example, the third crystalline carbons UGR may be oriented in an upright position. As the third crystalline carbons UGR are oriented, the third active material layer NAL3 may have a relatively small tortuosity and a relatively large porosity. As a movement path of lithium ions is reduced in the third active material layer NAL3, lithium ions may easily move in the third active material layer NAL3. In embodiments, the third active material layer NAL3 may improve in ion conductivity.

The first crystalline carbons LGR of the first active material layer NAL1 may have a relatively small DD value and a relatively small average angle. For example, the first crystalline carbons LGR may be randomly oriented in a lying down position. The first active material layer NAL1 may have a relatively large tortuosity and a relatively small porosity.

The random orientation of the first crystalline carbons LGR may cause an increase in contact area between the first crystalline carbons LGR and the top surface of the negative electrode current collector COL2. There may be an increase in friction force between the first active material layer NAL1 and the negative electrode current collector COL2. There may be an improvement in adhesive force between the first active material layer NAL1 and the negative electrode current collector COL2.

The second active material layer NAL2 and the third active material layer NAL3 may be physically stably supported by the first active material layer NAL1. Even if negative electrode active materials (or crystalline carbons) are compressed if the negative electrode active material layer AML2 is roll-pressed, negative electrode active materials in the second active material layer NAL2 and the third active material layer NAL3 may stably maintain an orientation state.

Compared to the third active material layer NAL3, the first active material layer NAL1 may have a reduced ion mobility (or conductivity). However, the first active material layer NAL1 may help to stabilize the adhesion between the negative electrode active material layer AML2 and the negative electrode current collector COL2, and to physically stably support the second and third active material layers NAL2 and NAL3.

In the embodiments that follow, a detailed description of technical features repetitive to those of the rechargeable lithium battery discussed above with reference to FIGS. 6-8C may not be repeated, and a difference thereof will be discussed in more detail.

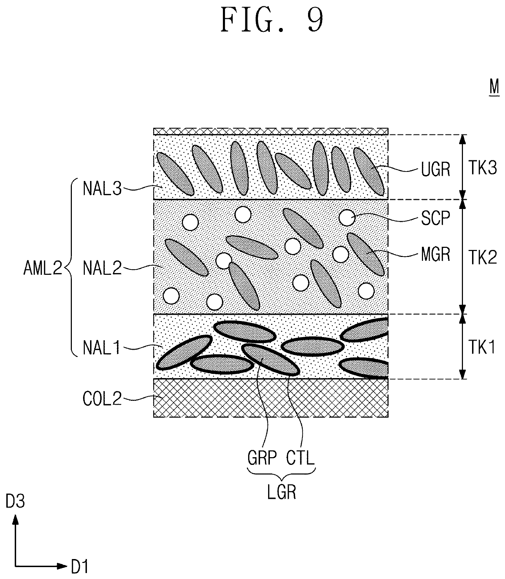

FIG. 9 illustrates an enlarged cross-sectional view of section M in FIG. 6, showing a rechargeable lithium battery according to another embodiment of the present disclosure. Referring to FIG. 9, the first crystalline carbon LGR in the first active material layer NAL1 may include a carbon particle GRP and a coating layer CTL. The coating layer CTL may envelop a surface of the carbon particle GRP. The coating layer CTL may include a magnetic substance. The coating layer CTL may be configured such that the carbon particle GRP is horizontally arranged by magnetic force.

In an embodiment, the coating layer CTL may cause the first crystalline carbon LGR to have an average angle less than that of the first crystalline carbon LGR shown in FIG. 7. The coating layer CTL may cause the first active material layer NAL1 to have a DD value less than that of the first active material layer NAL1 shown in FIG. 7.

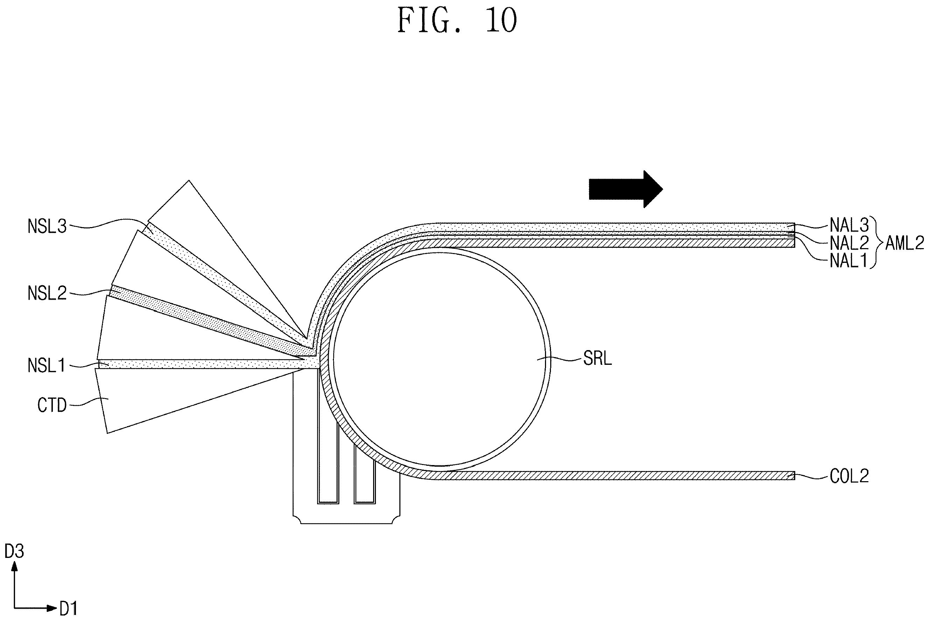

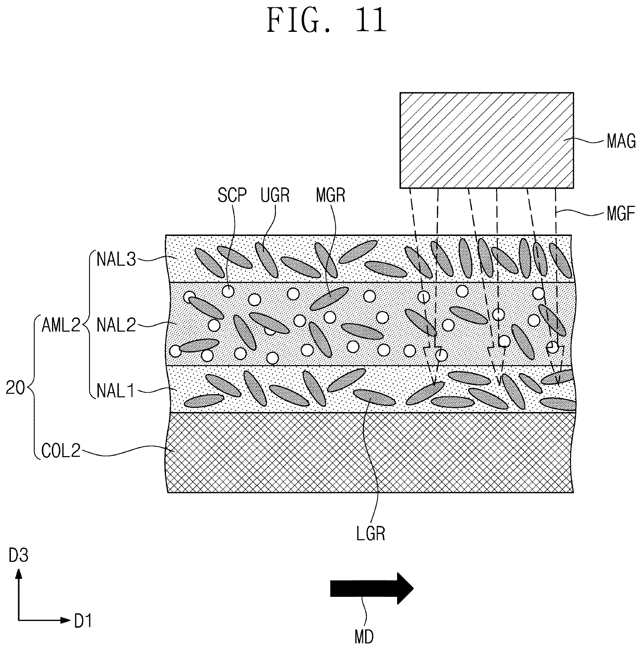

FIGS. 10-11 are cross-sectional views showing a method of manufacturing a negative electrode according to an embodiment of the present disclosure.

Referring to FIG. 10, a wound negative electrode current collector COL2 may be unwrapped and fed into a coating process. The traveling negative electrode current collector COL2 may be transported and coated in a first direction D1 by a supporting roll SRL. On the supporting roll SRL, the negative electrode current collector COL2 may undergo a coating process.

A coating die CTD may be adjacent to the supporting roll SRL. The coating die CTD may include three holes for slurry injection. The three slurry injection holes may be provided with a first negative electrode slurry NSL1, a second negative electrode slurry NSL2, and a third negative electrode slurry NSL3. The coating die CTD may provide the first negative electrode slurry NSL1, the second negative electrode slurry NSL2, and the third negative electrode slurry NSL3 sequentially coated on the negative electrode current collector COL2.

For example, the first negative electrode slurry NSL1 may include a first crystalline carbon LGR, a binder, and a solvent. The second negative electrode slurry NSL2 may include a second crystalline carbon MGR, a silicon-containing particle SCP, a binder, and a solvent. The third negative electrode slurry NSL3 may include a third crystalline carbon UGR, a binder, and a solvent. Each of the first, second, and third crystalline carbons LGR, MGR, and UGR may be natural graphite, artificial graphite, or any suitable mixture thereof. For example, the first negative electrode slurry NSL1 may include natural graphite in majority (e.g., as a major component). The third negative electrode slurry NSL3 may include artificial graphite in majority (e.g., as a major component).

The solvent in the slurry may be any suitable solvent generally used in the art, for example, may include at least one selected from dimethyl sulfoxide (DMSO), isopropyl alcohol, N-methyl pyrrolidone (NMP), acetone, water, and a combination thereof.

The first negative electrode slurry NSL1, the second negative electrode slurry NSL2, the third negative electrode slurry NSL3 coated on the negative electrode current collector COL2 may be respectively formed into a first active material layer NAL1, a second active material layer NAL2, and a third active material layer NAL3 that are discussed above with reference to FIG. 6. A negative electrode active material layer AML2 may be constituted by the first active material layer NAL1, the second active material layer NAL2, and the third active material layer NAL3 that are sequentially stacked on the negative electrode current collector COL2.

A magnetically oriented graphite anode (MOGA) process may be performed on the negative electrode active material layer AML2. The MOGA process may refer to a technique that increases a vertical orientation ratio by applying a magnetic force to graphite particles having diamagnetic properties.

For example, the negative electrode current collector COL2 and the negative electrode active material layer AML2 may travel along the first direction D1. In embodiments, the travel direction MD of the negative electrode active material layer AML2 may be parallel to the first direction D1.

A magnet MAG may be provided on the third active material layer NAL3 of the negative electrode active material layer AML2. The magnet MAG may apply a magnetic force MGF toward the negative electrode active material layer AML2. For example, the magnetic MAG may have a magnetic field whose intensity is $\geq 4{,}000$ Gauss. The magnetic force MGF may strongly act on the third active material layer NAL3 close to the magnet MAG. The magnetic force MGF may weakly act on the first active material layer NAL1 far from the magnet MAG.

In an embodiment, a magnetic flux caused by the magnetic MAG may be formed in a direction perpendicular (or substantially perpendicular) to the top surface of the negative electrode current collector COL2, but owing to a travel speed, the magnetic force MGF may act in a vector direction of a magnetic field direction (opposite to a third direction D3) and a travel direction MD. For example, a direction of the magnetic force MGF may be inclined at a set or certain angle without being completely perpendicular to the top surface of the negative electrode current collector COL2. Thus, the third crystalline carbon UGR may be oriented at an average angle (see FIG. 8C) less than 90°.

As the magnetic force MGF weakly acts on the first active material layer NAL1, unlike the third crystalline carbon UGR, the first crystalline carbon LGR may be randomly oriented without being uprightly oriented. There may thus be maintained an increased contact area between the negative electrode current collector COL2 and the first crystalline carbons LGR of the first active material layer NAL1.

The magnetic force MGF acting on the second active material layer NAL2 may be weaker than that acting on the third active material layer NAL3 and stronger than that acting on the first active material layer NAL1. Thus, the second crystalline carbon MGR in the second active material layer NAL2 may be oriented at an average angle of $\geq 20°$ to $\leq 60°$.

Afterwards, a dry process may be performed on the negative electrode active material layer AML2 that has undergone the MOGA process. After the drying of the negative electrode active material layer AML2, a negative electrode 20 may sequentially undergo a roll pressing process, a slitting process, and a notching process. The negative electrode 20, a separator 30, and a positive electrode 10 may be stacked, and then an electrolyte ELL may be provided to fabricate a rechargeable lithium battery according to the present disclosure.

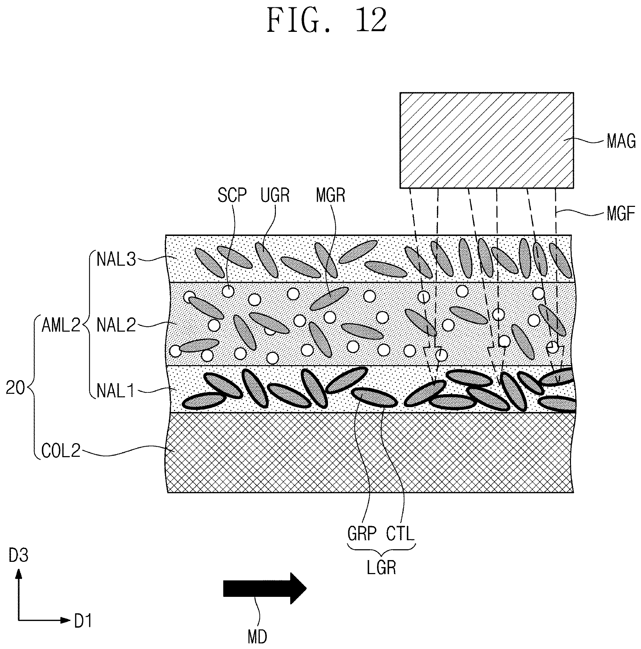

FIG. 12 is a cross-sectional view showing a method of manufacturing a negative electrode according to another embodiment of the present disclosure. Referring to FIG. 12, the first crystalline carbon LGR may include a carbon particle GRP and a coating layer CTL. The coating layer CTL may include a magnetic substance. The coating layer CTL may be affected by the magnetic force MGF to randomly orient the first crystalline carbon LGR. The first crystalline carbon LGR may horizontally lie on a top surface of the negative electrode current collector COL2.

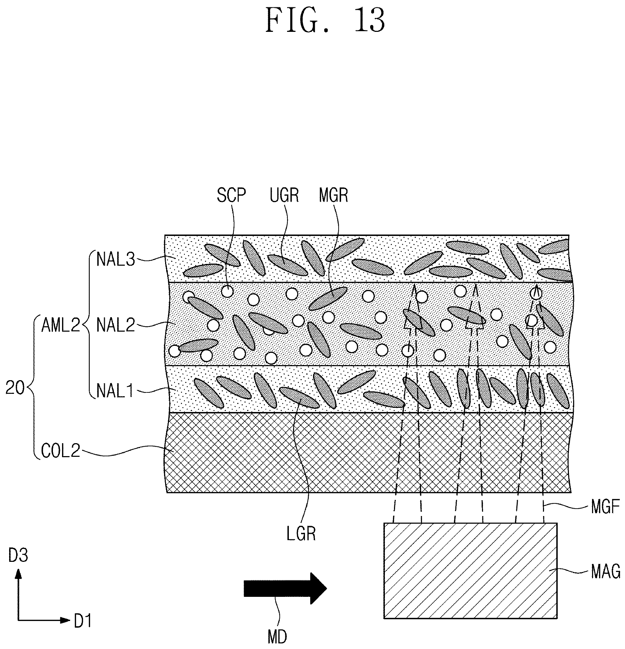

FIG. 13 illustrates a cross-sectional view showing a method of manufacturing a negative electrode according to a comparative example of the present disclosure. Referring to FIG. 13, a method of manufacturing a negative electrode according to a comparative example of the present disclosure may include allowing the magnet MAG to reside adjacent to the first active material layer NAL1. For example, according to a comparative example, the magnetic MAG may be beneath the negative electrode current collector COL2. The magnetic force MGF may strongly act on the first active material layer NAL1 close to the magnet MAG. The magnetic force MGF may weakly act on the third active material layer NAL3 far from the magnet MAG.

As the magnetic force MGF strongly acts on the first active material layer NAL1, the first crystalline carbon LGR may be uprightly oriented. The vertical orientation of the first crystalline carbons LGR may cause a reduction in contact area between the first crystalline carbons LGR and the top surface of the negative electrode current collector COL2. Therefore, an adhesive force between the first active material layer NAL1 and the negative electrode current collector COL2 may be reduced to induce a problem of easy detachment of the negative electrode active material layer AML2 from the negative electrode current collector COL2. Consequently, it may be required to increase a binder amount in the first active material layer NAL1 for improvement of adhesive force, and this may induce a problem of reduction in energy density.

As the magnetic force MGF weakly acts on the third active material layer NAL3, the third crystalline carbon UGR may be randomly oriented. A movement path of lithium ions may be increased in the third active material layer NAL3, and lithium ions may be difficult to move in the third active material layer NAL3. In this sense, the third active material layer NAL3 may decrease in ion conductivity.

The following description will focus on some embodiments of the present disclosure. The following embodiments are provided to aid in understanding of the present disclosure and are not intended to limit the scope of the present disclosure.

## Manufacture of Negative Electrode: Embodiment 1

68 wt% of natural graphite, 30 wt% of artificial graphite, 0.8 wt% of carboxymethyl cellulose, and 1.2 wt% of styrene-butadiene rubber were mixed together in pure water to prepare a first negative electrode slurry. 44 wt% of natural graphite, 44 wt% of artificial graphite, 9 wt% of silicon nano-particles, 0.8 wt% of carboxymethyl cellulose, and 2.2 wt% of styrene-butadiene rubber were mixed together in pure water to prepare a second negative electrode slurry. 68 wt% of artificial graphite, 30 wt% of natural graphite, 0.8 wt% of carboxymethyl cellulose, and 1.2 wt% of styrene-butadiene rubber were mixed together in pure water to prepare a third negative electrode slurry.

The first negative electrode slurry, the second negative electrode slurry, and the third negative electrode slurry were sequentially coated on a copper current collector to respectively form a first active material layer, a second active material layer, and a third active material layer. A magnet was provided on the third active material layer. A negative electrode active material layer traveled past the magnet along one direction. The magnet may have a magnetic field having an intensity of 4,000 Gauss.

After the termination of the MOGA process that applies a magnetic force to the first to third active material layers, the negative electrode active material layer was firstly dried at 80 °C and then roll-pressed. The negative electrode active material layer was secondly dried at 120 °C under the vacuum condition. Accordingly, a negative electrode of Embodiment 1 was manufactured.

## Embodiment 2

The natural graphite and the natural graphite in the first negative electrode slurry were coated with a magnetic substance (see FIG. 12). Except that mentioned above, a negative electrode of Embodiment 2 was manufactured according to the same method as in Embodiment 1.

## Comparative Example 1

A negative electrode of Comparative Example 1 was manufactured according to the same method as in Embodiment 1, except that the MOGA process was omitted.

## Comparative Example 2

The magnet was provided beneath the negative electrode current collector (see FIG. 13). A negative electrode of Comparative Example 2 was manufactured according to the same method as in Embodiment 1, except that the magnetic was positioned closes to the first active material layer.

## Comparative Example 3

The magnet was adjusted to have a magnetic field having a strong intensity of 8,000 Gauss. Except that mentioned above, a negative electrode of Comparative Example 3 was manufacture according to the same method as in Embodiment 1.

## Fabrication of Half Cell

A prepared negative electrode was wound into a circular shape having a diameter of 12 mm, and then a 2032-type coin half-cell was fabricated with lithium metal as a counter electrode. An organic electrolyte was used in which 1.3 M LiPF6 was dissolved in a mixture solvent containing ethylene carbonate, diethyl carbonate, and fluoroethylene carbonate mixed together in a weight ratio of 2:6:2.

**Evaluation 1**: **The degree of orientation of graphite in first to third active material layers**

The negative electrodes according to Embodiment 1 and 2 and Comparative Examples 1 to 3 were dissembled to measure a degree of divergence (DD) value for each of the first to third active material layers.

A scanning electron microscope (SEM) image of the negative electrode was used to measure an average angle of a graphite particle in each of the first to third active material layers. For example, among graphite particles in the image, 50 particles were randomly selected from each layer to calculate an average angle thereof.

The results are listed in Table 1 below.

Table 1

| | 1st active material layer | | 2nd active material layer | | 3rd active material layer | |
|---|---|---|---|---|---|---|
| | DD value | Average angle | DD value | Average angle | DD value | Average angle |
| Embodiment 1 | 20 | 22° | 35 | 41° | 45 | 71° |
| Embodiment 2 | 6 | 10° | 32 | 46° | 39 | 82° |
| Comparative Example 1 | 12 | 21° | 14 | 22° | 13 | 21° |
| Comparative Example 2 | 41 | 69° | 30 | 41° | 20 | 24° |
| Comparative Example 3 | 26 | 40° | 46 | 73° | 56 | 85° |

Referring to Table 1, in Embodiment 1 and Embodiment 2, the third active material layer has a maximum (e.g., the largest) DD value and a maximum (e.g., the largest) average angle. In Embodiment 1 and Embodiment 2, the first active material layer has a minimum (e.g., the smallest) DD value and a minimum (e.g., the smallest) average angle. In contrast, in Comparative Example 2, the first active material layer has a maximum (e.g., the largest) DD value and a maximum (e.g., the largest) average angle. In Comparative Example 1, the third active material layer has a minimum (e.g., the smallest) DD value and a minimum (e.g., the smallest) average angle.

In Comparative Example 3, each of the first to third active material layers has a maximum (e.g., the largest) DD value. A ratio of the DD value of the third active material layer to the DD value of the first active material layer in Comparative Example 3 is 2.52, which DD value ratio (2.52) is less than a DD value ratio (4.3) in Embodiment 1 and a DD value ratio (6.5) in Embodiment 2.

In the negative electrodes according to Embodiment 1 and Embodiment 2, as crystalline carbons of the first active material layer in contact with the current collector are randomly oriented, a superior adhesive force may be provided between the first active material layer and the current collector. In the negative electrodes according to Embodiment 1 and Embodiment 2, as crystalline carbons of the third active material layer at a top position are vertically oriented, excellent lithium ion conductivity may be achieved.

**Evaluation 2: Specific capacity characteristics of half cells and Charge characteristics for each rate of rechargeable lithium batteries**

The coin half-cells using the negative electrodes according to Embodiments 1 and 2 and Comparative Examples 1 to 3 were 0.2 C, 0.01 V cut-off charged under the condition of constant current, 0.01 C cut-off charged under the condition of constant voltage, and 0.2 C, 1.5 V cut-off discharged under the condition of constant current. A discharge capacity at the first charge/discharge was obtained to evaluate specific capacity characteristics of the half cell, and the results are listed in Table 2 below.

The coin full-cells using the negative electrodes according to Embodiments 1 and 2 and Comparative Examples 1 to 3 were once charged and discharged in which 0.2 C, 4.25 V cut-off charged under the condition of constant current, 0.05 C cut-off charged under the condition of constant voltage, and 2.8 V cut-off discharged under the condition of constant current, and then discharge was carried out at 4.25 V cut-off and 0.05 C cut-off under the condition of constant voltage while maintaining 2.8 V cut-off and 0.2 C under the condition of a constant current and changing a C-rate to 0.5 C, 1.0 C, and 2.0 C under the condition of constant current for charge.

A ratio of a charge capacity at each C-rate to a charge capacity at 0.2 C for one cycle was calculated from the measured results, and the calculated results are listed in Table 2 below.

Table 2

| | DD value ratio | Capacity (mAh/g) | Charge amount/One-cycle charge amount (%) | | | |
|---|---|---|---|---|---|---|
| | 3rd layer/1st layer | 0.2 C discharge | 0.2 C | 0.5 C | 1.0 C | 2.0 C |
| Embodiment 1 | 2.25 | 383 | 100 | 94.2 | 81.8 | 69.3 |
| Embodiment 2 | 6.5 | 372 | 100 | 94.7 | 84.5 | 70.6 |
| Comparative Example 1 | 1.08 | 357 | 100 | 93.6 | 75.1 | 60.9 |
| Comparative Example 2 | 0.49 | 331 | 100 | 90.3 | 71.7 | 59.8 |
| Comparative Example 3 | 2.15 | 355 | 100 | 94.2 | 79.3 | 68.8 |

Referring to Table 2, in Comparative Example 1 and Comparative Example 2, it may be observed that, as crystalline carbons in the third active material layer are randomly oriented, ion conductivity is reduced to decease a charge rate. In Comparative Example 2 and Comparative Example 3, as crystalline carbons in the third active material layer have orientation, an addition amount of a binder is increased for the adhesion of an electrode plate. It may thus be ascertained that a specific capacity is decreased. It may be observed that, if there is an overall increase in orientation of crystalline carbons in the first to third active material layers (Comparative Example 3), a specific capacity and a charge rate are rather reduced.

In contrast, in Embodiment 1 and Embodiment 2, it may be observed that crystalline carbons in the third active material layer are favorably oriented to increase ion conductivity and charge rate. In Embodiment 1 and Embodiment 2, crystalline carbons in the first active material layer are randomly oriented to increase the adhesion of an electrode plate and to decrease an addition amount of a binder. It may thus be ascertained that a specific capacity is increased.

A negative electrode for a rechargeable lithium battery according to embodiments of the present disclosure may have a superior adhesive force between a first active material layer and a current collector. As a third active material layer of the negative electrode includes crystalline carbons that are vertically oriented, lithium ion conductivity may be excellent. As a result, the rechargeable lithium battery according to the present disclosure may have an excellent capacity and a superior charge/discharge rate.

While the subject matter of this disclosure has been described in connection with what is presently considered to be example embodiments, it is to be understood that the present disclosure is not limited to the disclosed embodiments and is intended to cover various modifications and equivalent arrangements included within the spirit and scope of the appended claims and equivalents thereof, and therefore the aforementioned embodiments should be understood to be examples but not limiting this disclosure in any way.

**Claims**

1. A negative electrode (20) for a rechargeable lithium battery (100), the negative electrode (20) comprising:

a negative electrode current collector (COL2); and
a negative electrode active material layer (AML2) on the negative electrode current collector (COL2),
wherein the negative electrode active material layer (AML2) comprises a first active material layer (NAL1), a second active material layer (NAL2), and a third active material layer (NAL3) that are sequentially stacked on the negative electrode current collector (COL2),
wherein the first, second, and third active material layers (NAL1, NAL2, NAL3) comprise first, second, and third crystalline carbons (LGR, MGR, UGR), respectively,
wherein the first active material layer (NAL1) is a random orientation layer whose degree of divergence (DD) value defined by Equation 1 is $\geq 5$ to $\leq 20$,
wherein the third active material layer (NAL3) is an orientation layer whose DD value defined by Equation 1 is $\geq 20$ to $\leq 60$,

Equation 1

$$DD \text{ (degree of divergence)} = (I_a/I_{total}) \times 100$$

wherein, in Equation 1,

$I_a$ is a sum of peak intensities at non-planar angles in an XRD measurement using a CuKα ray, and

$I_{total}$ is a sum of peak intensities at all angles in the XRD measurement using the CuKα ray.

2. The negative electrode (20) as claimed in claim 1, wherein a DD value defined by Equation 1 of the second active material layer (NAL2) is in a range of $\geq 15$ to $\leq 50$,
   wherein the DD value of the second active material layer (NAL2) is greater than the DD value of the first active material layer (NAL1) and less than the DD value of the third active material layer (NAL3).

3. The negative electrode (20) as claimed in claim 1 or 2, wherein a difference between the DD value of the third active material layer (NAL3) and the DD value of the first active material layer (NAL1) is in a range of $\geq 10$ to $\leq 50$.

4. The negative electrode (20) as claimed in any one of claims 1 to 3, wherein a ratio of the DD value of the third active material layer (NAL3) to the DD value of the first active material layer (NAL1) is in a range of $\geq 2.2$ to $\leq 7$.

5. The negative electrode (20) as claimed in any one of claims 1 to 4, wherein the second active material layer (NAL2) further comprises a silicon-containing particle.

6. The negative electrode (20) as claimed in any one of claims 1 to 5, wherein:

   a proportion of natural graphite in the first crystalline carbon (LGR) is greater than a proportion of artificial graphite in the first crystalline carbon (LGR), and
   a proportion of artificial graphite in the third crystalline carbon (UGR) is greater than a proportion of natural graphite in the third crystalline carbon (UGR).

7. The negative electrode (20) as claimed in any one of claims 1 to 6, wherein an average angle between a major axis of the first crystalline carbon (LGR) and a top surface of the current collector is in a range of $\geq 0°$ to $\leq 40°$.

8. The negative electrode (20) as claimed in any one of claims 1 to 7, wherein an average angle between a major axis of the second crystalline carbon (MGR) and a top surface of the current collector is in a range of $\geq 20°$ to $\leq 60°$.

9. The negative electrode (20) as claimed in any one of claims 1 to 8, wherein an average angle between a major axis of the third crystalline carbon (UGR) and a top surface of the current collector is in a range of $\geq 50°$ to $\leq 89°$.

10. The negative electrode (20) as claimed in any one of claims 1 to 9, wherein the first crystalline carbon (LGR) comprises a carbon particle (GPR) and a coating layer (CTL) on a surface of the carbon particle (GPR),
    wherein the coating layer (CTL) comprises a magnetic substance.

11. The negative electrode (20) as claimed in any one of claims 1 to 10, wherein a porosity of the third active material layer (NAL3) is greater than a porosity of the first active material layer (NAL1).

12. A rechargeable lithium battery (100), comprising:

    the negative electrode (20) as claimed in any one of claims 1 to 11;
    a positive electrode; and
    an electrolyte between the negative electrode (20) and the positive electrode.

# FIG. 1

# FIG. 2

# FIG. 3

EP 4 636 843 A2

# FIG. 4

# FIG. 5

# FIG. 6

# FIG. 7

# FIG. 8A

NAL1

# FIG. 8B

NAL2

FIG. 8C

# FIG. 9

# FIG. 10

NSL3

NSL2

NSL1

CTD

NAL3
NAL2 } AML2
NAL1

SRL

COL2

D3
D1

EP 4 636 843 A2

# FIG. 11

# FIG. 12

# FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240050838